# EUROPEAN PATENT APPLICATION

(11) **EP 1 884 803 A1**
(43) Date of publication of application: **06.02.2008**
(21) Application number: 07108069.1
(22) Date of filing: 11.05.2007
(51) Int. Cl.: G01S 17/42, G01S 7/00

(54) **Beacon to measure distance, positioning system using the same, and method of measuring distance**

(30) Priority: 18.07.2006 KR 20060066964
(71) Applicant: SAMSUNG ELECTRONICS CO., LTD., Suwon-si, Gyeonggi-do 442-742 (KR)
(72) Inventor: Kim, Yong Jae, Seoul (KR); Oh, Yeon Taek, Yongin-si Gyeonggi-do (KR); Park, Ki Cheol, Taean-eub, Hwaseong-si Gyeonggi-do (KR); Ko, Won Jun, Gilheung-eup, Yongin-si Gyeonggi-do (KR); Kim, Sung Ha, Seoul (KR)
(74) Representative: Brandon, Paul Laurence

(57) **Abstract**

A beacon (300) to measure a distance based on a time difference between a transmitted light and a reflected light and to put the measured distance information into the lights, and a positioning system to detect a position of a moving body (400) using the beacon, and a method thereof. Since a relative position of the moving body with respect to the beacon is precisely detected and infrared laser having directionality is used as a light source, the moving body can travel in a wide working area.

## Description

The present general inventive concept relates to positioning systems to detect a position of a mobile robot and positioning methods thereof.

Application fields of robots are gradually spreading to all industry fields, and various types of new robots are appearing such as a home robot for attending to household affairs. In the past, a robot carried out specific functions within a restricted space, but now moves freely and works independently from a fixed track.

A conventional robot system includes an exterior light transmitting unit such that a freely movable robot can detect its own present position. The light transmitting unit includes a plurality of optical transmitters for transmitting directional lights such as infrared rays, electromagnetic waves, or the like from fixed positions. The directional lights transmitted from the optical transmitters, because of the directionality of the lights, reach the robot positioned at a predetermined region according to the fixed positions of the respective optical transmitters.

Moreover, the respective optical transmitters transmit directional lights containing specific identity information to distinguish the directional lights of one optical transmitter from other directional lights transmitted from other optical transmitters. The robot includes a plurality of optical receivers and a controller. The optical receivers receive the directional lights transmitted from the optical transmitters and output information about intensities of the received directional lights to the controller. The controller, based on the information about the intensities of the directional lights provided from the optical receivers, determines relative positions of the robot with respect to the optical transmitters.

However, since the conventional robot system is significantly affected according to specifications of the optical transmitters and the optical receivers when measuring the intensities of lights, the relative positions of the robot cannot be precisely detected based on the intensities of lights. Moreover, since an energy of the light transmitted into space is inversely propositional to square of distance from the optical transmitter, a position measurement based on the intensity of light is restricted by the distance between the optical transmitter and the robot.

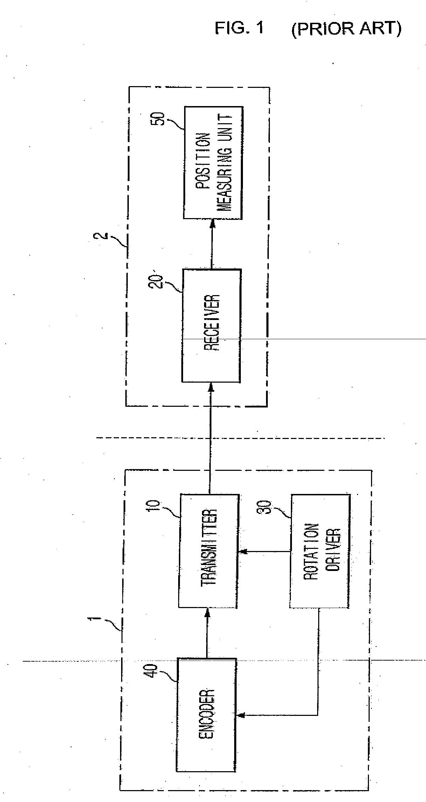

By taking the problem occurring in measuring the position based on the intensity of light into consideration, Korean Patent Laid-Open No. 10-2005-0016786 discloses a robot system for detecting a position of a robot by receiving light containing phase information that is transmitted from a beacon. This robot system, as illustrated in FIG. 1, includes a beacon 1 and a mobile robot 2. The beacon 1 includes a rotation driver 30 for rotating a transmitter 10 for transmitting a positioning light and an encoder 40 for putting the phase information of the transmitter 10 rotated by the rotation driver 30 into the positioning light.

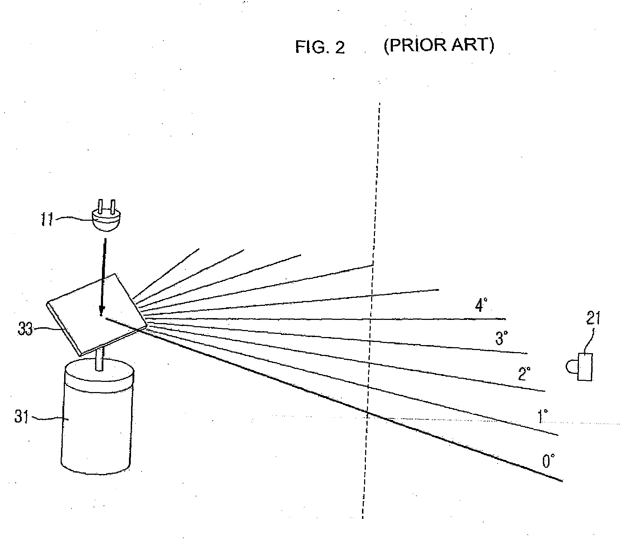

Referring to FIG. 2, the rotation driver 30 includes a motor 31 for rotating a single mirror 33. As the single mirror 33 is rotated by the motor 31, an infrared ray, transmitted from an infrared ray transmitter 11 of the transmitter 10, is reflected by the single mirror 33 at a predetermined phase angle. The rotation driver 30 delivers the phase information of the infrared ray reflected by the rotating mirror 33 to the encoder 40 such that the infrared transmitter 11 transmits the infrared ray containing phase information. By doing so, in the mobile robot 2, a position measuring unit 50 can measure a position of the mobile robot 2 based on the phase information of the infrared ray received from the infrared receiver 21 of a receiver 20.

However, if a single beacon is installed, this robot control system cannot detect the position and direction of the robot without at least three items of received information. When the three items of the information are received from near places by receivers near each other, a precision of the position and direction of the robot is inferior.

Thus, in a small sized robot in which three receivers must be installed close to each other, it is difficult to precisely measure the position and direction of the robot.

In order to solve the above problems, a single receiver is installed in the robot and the robot moves so that the position of the robot can be estimated by obtaining three different information items from different places. However, in this case, an additional estimation must be carried out to obtain the precise traveled distance of the robot between the different places. Additionally, there is a method of detecting the position of the robot using two beacons. However, in this case, since the number of the beacons increases, costs increase and the precision of the position of the robot is deteriorated when a distance between two beacons is small.

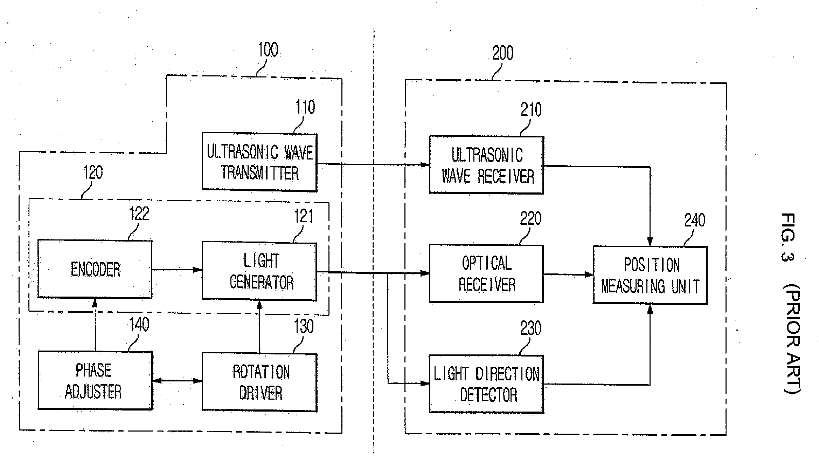

Another robot system for transmitting ultrasonic waves together with light for the measurement of a position of a robot is disclosed in Korean Patent Laid-Open No. 10-2006-0068968. This robot system, as illustrated in FIG. 3, includes a beacon 100 and a mobile robot 200. The beacon 100 transmits light containing phase information through an optical outputting unit 120 rotated by a rotation driver 130, and transmits ultrasonic waves through an ultrasonic transmitter 110 according to the rotation of the rotation driver 130. The optical outputting unit 120 includes a light generator 121 for transmitting an infrared ray and an encoder 122 for receiving phase information provided by the rotation driver 130 from a phase adjustor 140 and coding the provided phase information into the infrared ray transmitted from the light generator 121.

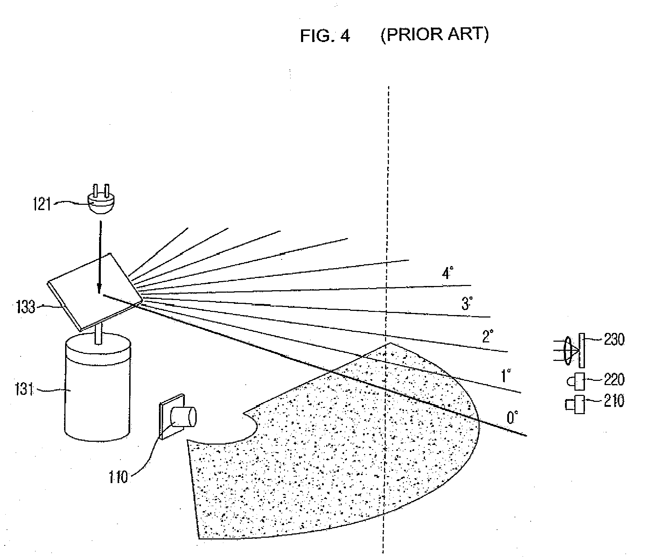

Referring to FIG. 4, a motor 131 of the rotation driver 130 rotates a single mirror 133, and the infrared ray transmitted from the light generator 121 is reflected at a predetermined angle by the single mirror 133. The rotation driver 130 delivers the phase information of the infrared ray reflected by the rotating mirror to the phase adjustor 140, and the phase adjustor 140 delivers the same to the encoder 122.

An optical receiver 220 and an ultrasonic receiver 210 respectively receive the infrared ray and the ultrasonic waves transmitted from the beacon 100 and provide the same to a position measuring unit 240. A light direction detector 230 detects the traveling direction of the robot using the infrared ray transmitted from the beacon 100 and provides the same to the position measuring unit 240. The position measuring unit 240 can estimate the position of the robot using the phase information received through the optical receiver 222 of the mobile robot, a time when the ultrasonic waves are received through the ultrasonic receiver 210, and the direction from which the infrared ray is transmitted, detected by a light direction detector 230.

However, while the infrared ray containing the phase information can be transmitted a far distance, the ultrasonic waves cannot be transmitted a long distance, the infrared ray has a limit of applicable range. In other words, although the mobile robot at the long distance receives the infrared ray transmitted from the beacon, the robot cannot receive the ultrasonic waves when the distance is too far because of bad receiving characteristics of the ultrasonic waves. Thus, since it is difficult to detect a position of the mobile robot in a wide area, the range of use for the mobile robot is restricted.

Preferred embodiments of the present invention aim to provide a beacon to detect a position of a traveling object by measuring a distance based on a time difference between a light transmitted by the beacon and a reflected light received by the beacon and putting the measured distance information into the lights transmitted by the beacon, a positioning system using the beacon, and a positioning method thereof.

Preferred embodiments of the present invention aim to provide a beacon to measure a distance such that a traveling object may be used in a wide area by using an infrared laser having a long range and containing phase information and distance information, as a light source to determine position, a positioning system using the same, and a positioning method thereof.

Preferred embodiments of the present invention aim to provide a beacon to measure a distance based on a time difference between a transmitted light and a reflected light to reduce costs to construct a positioning system and to be easily employed in a small sized robot, the positioning system using the same, and a positioning method thereof.

According to the present invention in a first aspect, there is provided a positioning system including a beacon, and a moving body to communicate with the beacon, wherein the beacon measures a distance between the moving body and the beacon based on a time difference between a transmission time of a light transmitted by the beacon to detect a position of the moving body and a detecting time of a light reflected by the moving body to the beacon, and the moving body receives phase information and distance information of the transmitted light from the beacon to detect a relative position of the moving body with respect to the beacon.

The beacon may include a light generator to transmit a light having directionality, a detector to detect the reflected light, and a distance measuring unit to estimate the distance based on a difference between a time of a transmitted light signal of the transmitted light and a reflected light signal of the reflected light and a speed of light.

The distance measuring unit may include an amplifier to amplify a reflected light signal of the reflected light.

The light generator may include an infrared laser diode to transmit an infrared laser ray as the transmitted light.

The moving body may be a mobile robot that travels freely with respect to the beacon.

The moving body may be a movable cart to move with respect to the beacon.

The moving body may include a display to display the position of the movable cart.

The moving body may include an optical reflector installed on the surface of the moving body to reflect the light transmitted from the beacon as the reflected light.

The optical reflector may include a retroreflector to retroreflect an incident light to the beacon as the reflected light.

The beacon may include an encoder to encode the measured distance information and the phase information corresponding to the transmission direction of the light and to transmit the same to the moving body, and the moving body may include a position measuring unit to measure a relative position of the moving body based on the distance information and the phase information contained in the light.

The encoder may encode to contain the phase information corresponding to a present transmission direction of the light and the distance information measured by a previous transmitted reflected light.

The encoder may produce a single packet encoded with the phase information, the distance information, and unique identity information of the beacon.

According to the present invention in a second aspect, there is provided a beacon having a light to detect a position of an object to be measured and to measure a distance to the object, the beacon including a light generator to transmit a light having directionality to the object, a reflected light detector to detect a light that is transmitted from the light generator and is reflected by the object, and a distance measuring unit to measure a distance between the beacon and the object based on a difference between a transmission time of the light and a detecting time of the reflected light.

The beacon may include a rotation driver to synchronize and rotate the light generator and the reflected light detector.

The rotation driver may include a motor and a rotation shaft integrally connected to the light generator and the reflected light detector to generate a driving force to rotate the light generator and the reflected light detector.

The beacon may include a phase adjustor to apply a driving signal to the rotation driver to adjust the transmission direction of the light and to output phase information corresponding to the transmission direction of the light, and an encoder to encode phase information of the phase adjustor and distance information measured by the distance measuring unit to put the encoded information into the light transmitted by the light generator.

The rotation driver may include at least one single mirror to switch the traveling direction of the transmitted light from the light generator and the traveling direction of a light retroreflected by the object, a motor to rotate the single mirror, and a rotation shaft to connect the single mirror to the motor.

The light generator and the reflected light detector may be disposed at a side of the single mirror.

When sides of the motor are individually provided with the at least one single mirror, the light generator transmits the light to one of the single mirrors on a first side thereof, the reflected light detector receives the reflected light reflected by a single mirror on a second side thereof, and the light generator and the reflected light detector are disposed in the longitudinal direction.

According to the present invention in a third aspect, there is provided a positioning method of a positioning system in which a moving body traveling in a working area distant from a beacon at a fixed position detects its own position, including transmitting a light having directionality from the beacon, measuring a distance between the beacon and the moving body by the beacon receiving the light reflected by the moving body, encoding the measured distance information and a phase information corresponding to the transmission direction of the light into the light, and detecting the position of the moving body based on the phase information and the distance information contained in the encoded light transmitted from the beacon by the moving body receiving the encoded light.

The encoding of the information may include encoding unique identity information of the beacon, and encoding the phase information, the distance information, and the unique identity information in a form of a single packet.

The distance information may include information measured by detecting a previous transmitted light, and the phase information may include phase information of a light that is presently transmitted.

The moving body may include a mobile robot, and the mobile robot may detect its own position and travel freely with respect to the beacon.

The moving body may include a movable cart having a display to display the position of the movable cart.

According to the present invention in a fourth aspect, there is provided a computer readable recording medium containing computer readable codes to perform a method of detecting a position of an object, the method including transmitting a light having directionality from a beacon, measuring a distance between the beacon and the object by the beacon receiving the light reflected by the object, encoding the measured distance information and a phase information corresponding to a transmission direction of the light into the light, and detecting a position of the object based on the phase information and the distance information contained in the light transmitted from the beacon to object.

According to the present invention in a fifth aspect, there is provided a beacon to communicate with an object to determine a position of the object, the beacon including a light generator to transmit a first light and a second light towards the object, a reflected light detector to detect a reflected light of the first light from the object, a distance measuring unit to measure a distance between the beacon and the object according to a time difference between a first time of the first light transmission and a second time of the detected reflected light, and an encoder to encode the information on the measured distance in a packet into the second light to be transmitted to the object.

According to the present invention in a sixth aspect, there is provided a mobile robot to communicate with a beacon, the mobile robot including an optical reflector to reflect a first light of the beacon, an optical receiver to receive a second light of the beacon, and a position measuring unit to measure a position of the optical receiver according to information contained in the second light of the beacon.

According to the present invention in a seventh aspect, there is provided a positioning system including a beacon to communicate with a mobile robot to determine a position of the mobile robot, the beacon including a light generator to transmit a first light and a second light towards the mobile robot, a reflected light detector to detect a reflected light of the first light from the mobile robot, a distance measuring unit to measure a distance between the beacon and the mobile robot according to a time difference between a first time of the first light transmission and a second time of the detected reflected light, and an encoder to encode the information on the measured distance in a packet into the second light to be transmitted to the mobile robot, and a mobile robot to communicate with the beacon, the mobile robot including an optical reflector to reflect the first light of the beacon, an optical receiver to receive the second light of the beacon, and a position measuring unit to measure a position of the optical receiver according to the information contained in the second light of the beacon.

The present invention will become apparent and more readily appreciated from the following description of the embodiments, taken in conjunction with the accompanying drawings of which:
FIG. 1 is a block diagram illustrating a conventional robot system for detecting position by transmitting light containing phase information;
FIG. 2 is a view illustrating operation of transmitting light at predetermined angles using a rotation driver in the conventional robot system of FIG. 1;
FIG. 3 is a block diagram illustrating a conventional robot system for detecting a position by transmitting light containing phase information on an infrared ray;
FIG. 4 is a view illustrating operation of transmitting the light at predetermined angles together with ultrasonic waves using a rotation driver in the conventional robot system of FIG. 3;
FIG. 5 is block diagram illustrating a robot system to detect a position by transmitting light containing phase information and distance information according to an embodiment of the present general inventive concept;
FIG. 6 is a view illustrating the detection of a reflected light beam while transmitting a light beam using a rotation driver in the robot system of FIG. 5;
FIG. 7 is a view illustrating transmission of a light beam from a light generator, positioned at a predetermined height, to a mobile robot, to which an optical receiver and an optical reflector are attached in the robot system of FIGS. 5 and 6;
FIG. 8 is a view schematically illustrating the optical reflector to retroreflect an incident light in the robot system of FIGS. 5 and 6;
FIG. 9 is a view illustrating a beam divergence occurring when an infrared laser ray transmitted from the light generator reaches a predetermined distance in the robot system of FIGS. 5 and 6;
FIG. 10 is a view illustrating a distance measuring unit to output distance information using a time difference between a transmitted light signal, that is received from the light generator, and a reflected light signal, that is received from a reflected light detector, to an encoder in the robot system of FIG. 5 according to an embodiment of the present general inventive concept;
FIG. 11 is a view illustrating the time difference between the transmitted light signal and the reflected light signal in a comparator in the distance measuring unit of FIG. 10;
FIG. 12 is a view illustrating estimation of a position and of a traveling direction carried out by a positioning device in the robot system of FIG. 5;
FIG. 13 is a flowchart illustrating a method to detect a position and a traveling direction of a robot according to an embodiment of the present general inventive concept;
FIG. 14 is a view illustrating transmission of a light beam while detecting a reflected light beam using a single mirror in a robot system according to an embodiment of the present general inventive concept;
FIG. 15 is a view illustrating transmission of a light beam while detecting a reflected light beam using two mirrors in a robot system according to an embodiment of the present general inventive concept; and
FIG. 16 is a schematic view illustrating a positioning system of a robot according to an embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

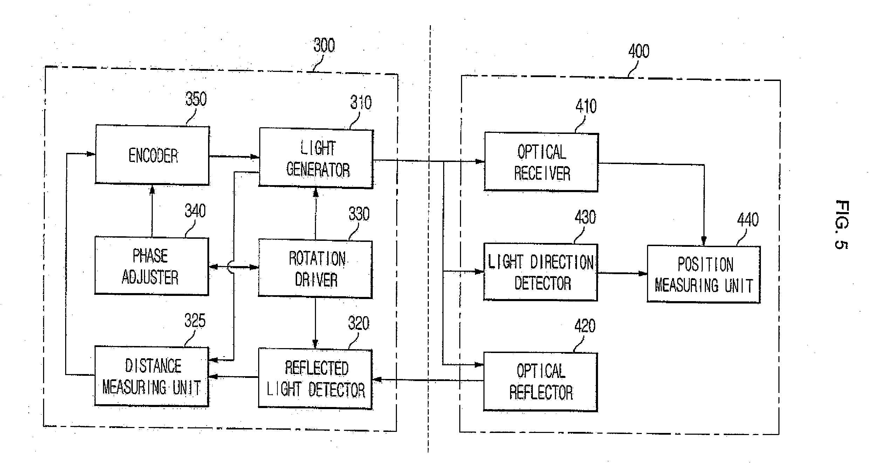

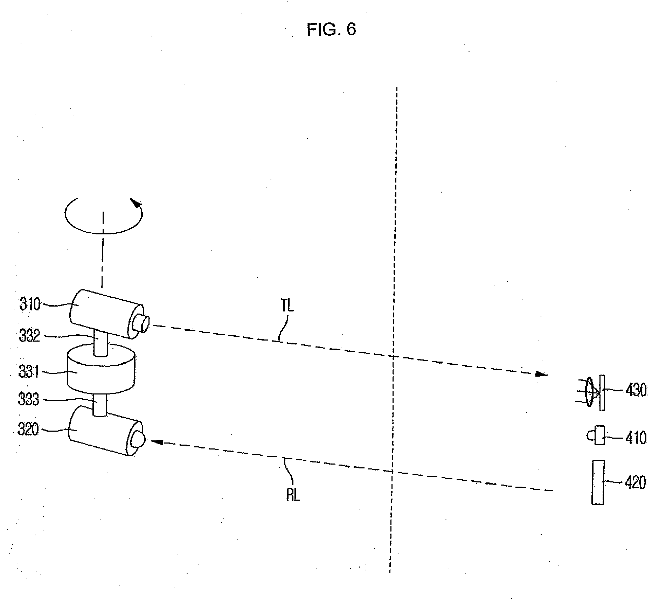

A robot system according to an embodiment of the present general inventive concept, as illustrated in FIGS. 5 and 6, includes a single beacon 300 that transmits a light beam TL and a mobile robot 400 that receives the light beam TL to communicate with each other.

The mobile robot 400 detects a relative position with respect to the beacon 300 using the light beam TL transmitted from the beacon 300, and moves freely in a working area.

The beacon 300 transmits the light beam TL as well as measures a distance between the beacon 300 and the mobile robot 400 based on a time difference between a time when the light beam TL is transmitted and a time when a light beam RL is reflected by the mobile robot 400 is detected by the beacon 300.

The beacon 300 includes a light generator 310 to output the light beam TL having directionality. In order to adjust a transmission direction of the light beam TL outputted from the light generator 310, a phase adjustor 340 applies a driving signal to a rotation driver 330. The rotation driver 330 responds to the driving signal of the phase adjustor 340 to rotate the light generator 310.

The rotation driver 330, as illustrated in FIG. 6, includes a rotation shaft 332 to connect a motor 331 to the light generator 310. The rotation shaft 332 is connected to the light generator 310 to transmit a driving force of the motor to the light generator 310. The motor 331 rotates the rotation shaft 332 such that the light generator 310 rotates at a predetermined angular velocity. Here, the motor 331 rotates within 360 degrees or reciprocates within a predetermined angle to adjust the transmission direction of the light beam TL transmitted from the light generator 310.

The mobile robot 400 includes an optical receiver 410 to receive the light beam TL transmitted from the light generator 310 and an optical reflector 420 to reflect the transmitted light beam back to the beacon 300 as the light beam RL such that the beacon 300 measures the distance between the beacon 300 and the mobile robot 400. The optical reflector 420 may use a retroreflector to reflect an incident light beam to return to the beacon 300 as the reflected light beam RL.

The beacon 300 includes a reflected light detector 320 to detect the reflected light beam RL retroreflected by the optical reflector 420. The reflected light detector 320 may include at least one lens (not shown) to collect only the reflected light beam RL and outputs a reflected light detection signal due to the detected reflected light beam RL to a distance measuring unit 325.

The rotation driver 330 includes a rotation shaft 333 to connect the motor 331 to the reflected light detector 320. The rotation shaft 333 is connected to the reflected light detector 320 to transmit the driving force of the motor to the reflected light detector 320. The motor 331 rotates the rotation shaft 333 such that the reflected light detector 320 rotates at the predetermined angular velocity. As illustrated in FIGS. 5 and 6, the rotation shaft 332 connected to the light generator 310 and the rotation shaft 333 connected to the reflected light detector 320 are synchronized to rotate together such that the light generator 310 to transmit the light beam TL is in phase with the reflected light detector 320 to detect the reflected light beam RL move together. As illustrated in FIG. 6, the light beam TL transmitted from the light generator 310 is reflected by the optical reflector 420 of the mobile robot 400 and the reflected light beam RL enters the reflected light detector 320.

The light generator 310 is a light source producing a light beam having a directionality that can reach a remote mobile robot and may include an infrared laser diode to transmit an infrared laser ray having a wavelength of 850 nm as the light beam TL.

The phase adjustor 340 adjusts the transmission direction of the infrared laser ray TL through the rotation driver 330 such that the infrared laser ray TL transmitted from the light generator 310 is transmitted in the direction corresponding to a phase informationΦ. Moreover, the phase adjustor 340 delivers the phase informationΦ about the transmission direction of the infrared laser ray TL to an encoder 350.

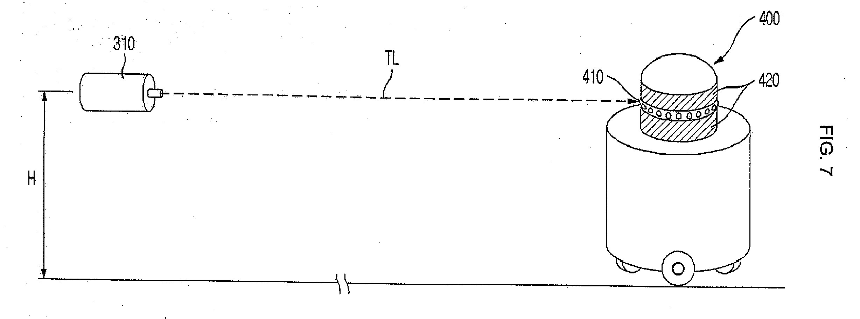

Since the infrared laser ray TL transmitted from the light generator 310 has directionality, the light generator 310 may be installed parallel to the ground. As illustrated in FIG. 7, the light generator 310 may be positioned at a predetermined height H corresponding to a position where the optical receiver 410 is installed on the mobile robot 400 and transmits the infrared laser ray TL.

Generally, since the mobile robot 400 performs a given job while traveling freely in a working area, in order for the traveling mobile robot 400 to receive the infrared laser ray TL transmitted from the light generator 310, a plurality of optical receivers 410 may be distributed on an outside of the mobile robot 400 to increase a receiving efficiency of the infrared laser ray TL. Where a plurality of optical receivers 410 are installed, the position of the mobile robot may be determined by using the infrared laser ray TL received by at least one of the plurality of optical receivers 410.

Moreover, in order to increase the receiving efficiency of the reflected light detector 320, the optical reflectors 420 to reflect the infrared laser ray TL, as the reflected light beam RL, and in this case, the reflected infrared laser ray RL, transmitted from the light generator 310 may be arranged at plural positions on an upper and a lower side of the optical receiver 410.

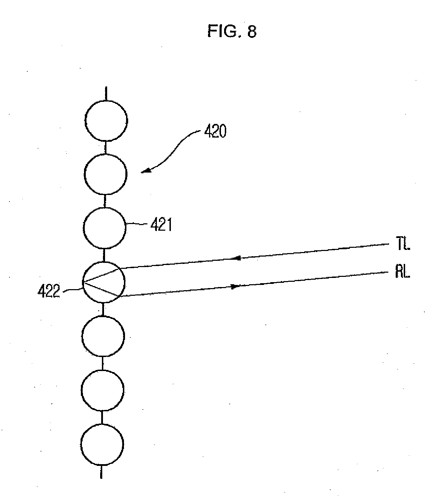

Each of the optical reflectors 420 may be selected from various structures to retroreflect a light beam to the transmitter. For example, as illustrated in FIG. 8, the optical reflector 420 may be structured as plural spherical bodies 421 that are vertically arranged and where each of them has a structure 422 to retroflect the infrared laser ray RL, entered through an incident surface thereof to the beacon 300 by the rear reflective surface thereof.

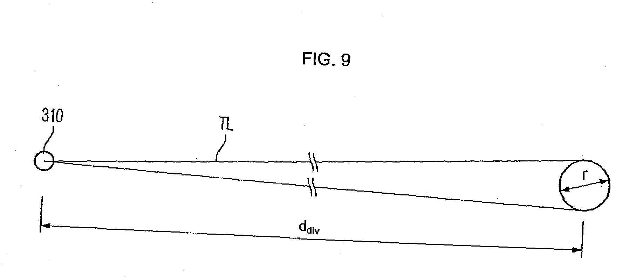

The infrared laser ray TL transmitted from the light generator 310, as illustrated in FIG. 9, diverges when it reaches a predetermined distance d_{div}, such that, for example, if the distance d_{div} is 100 m from the mobile robot, the infrared laser ray TL diverges and a diameter r thereof may be 1 m. Since, at a far distance, the infrared laser ray TL may be excessively diverged, the positioning efficiency may be deteriorated; therefore, the working area of the mobile robot may be determined by taking this property of the infrared laser ray TL into consideration. Thus, although the infrared laser ray TL transmitted into the properly determined working area diverges at the predetermined distance d_{div}, the transmitted laser ray TL is retroreflected by the optical reflector 420 adjacent to the optical receiver 410 and enters the reflected light detector 320, so that the infrared laser ray TL can be used to measure the distance between the beacon 300 and the moving mobile robot 400.

Referring to FIG. 5, the distance measuring unit 325 measures the distance between the beacon 300 and the robot 400 based on a signal corresponding to the transmitted infrared laser ray TL from the light generator 310, and a signal corresponding to the reflected infrared laser ray RL from the reflected light detector 320, and delivers measured distance information d to the encoder 350.

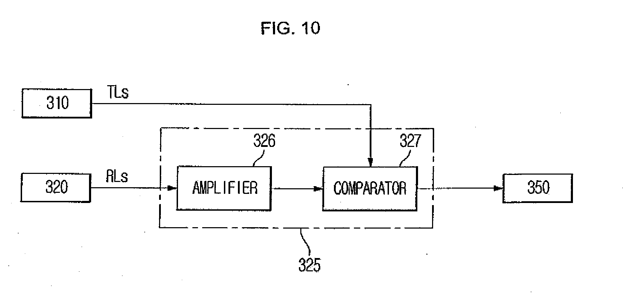

The distance measuring unit 325, as illustrated in FIG. 10, may include an amplifier 326 to amplify the reflected light signal RLs received from the reflected light detector 320 at a predetermined amplifying rate, and a comparator 327 to compare the amplified reflected light signal RLs amplified by the amplifier 326 with the transmitted light signal TLs provided by the light generator 310. In a case where the reflected infrared laser ray RL entering the reflected light detector 320 is weak and not adequate to perform signal processing for the comparison, the amplifier 326 amplifies the reflected light signal RLs to have a predetermined level.

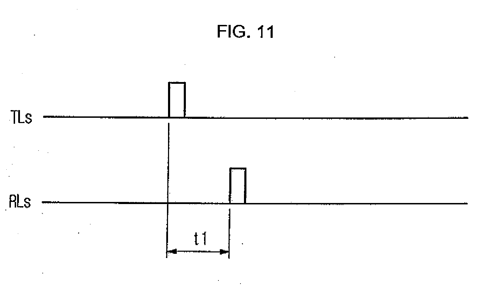

The distance measuring unit 325 may measure a distance between the beacon 300 and the mobile robot 400 using a Time-of-Flight Measurement. Referring to FIG. 11, the comparator 327 detects the distance d corresponding to a time difference t1 between the time of the transmitted light signal TLs of the transmitted infrared laser ray TL and the time of the reflected light signal RLs of the reflected infrared laser ray RL , and delivers distance information thereof to the encoder 350. Here, the distance d=c*t1 can be estimated using a speed of light c and the difference between the transmission time of the transmitted infrared laser ray TL and the detecting time of the reflected infrared laser ray RL.

A Phase-Shift measurement and a Frequency Modulated Continuous Wave (FMCW) Measurement may also be used as other methods of measuring a distance between the beacon 300 and the mobile robot 400 according to the present general inventive concept in addition to the Time-of-Flight measurement.

The encoder 350 may also encode supplementary information, such as the phase information received from the phase adjustor 340, the distance information, and unique identity information ID of the beacon 300, which is received from the distance measuring unit 325 and encodes the information into the infrared laser ray TL outputted from the light generator 310. The encoding of the supplementary information may be carried out in the encoder by keying methods such as a Phase Shift Keying or a Frequency Shift Keying.
Moreover, in a case of the transmission of the infrared laser ray TL from the light generator 310, an infrared ray communication may be performed according to a kind of a wireless communication protocol such as IrDA (Infrared Data Association). In that case, the supplementary information, that is, the phase information, the distance information, and the unique identity information ID are attached to a header to form a packet and the packet may be transmitted through the infrared laser ray TL.

The mobile robot 400 includes a light direction detector 430 to detect an entrance direction of the transmitted light and a position measuring unit 440 to detect a relative position of the mobile robot 400.

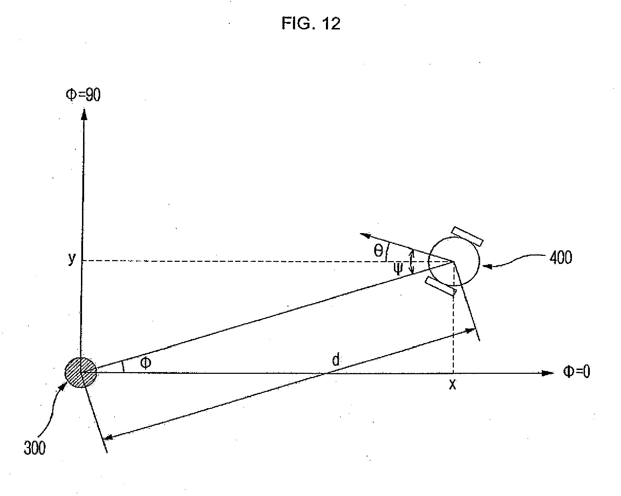

The light direction detector 430 may include a lens (not shown) to condense light and a position diode (not shown) to detect a position of the light condensed by the lens and provides information about the condensing position to the position measuring unit 440. A configuration for implementing the light direction detector 430 has been described as one of the conventional art, and is disclosed in Korean Patent Laid-Open No. 10-2006-0068968. Referring to FIG. 12, the position measuring unit 440 can detect a position of the mobile robot (x, y) based on the phase information φ and the distance information d that are contained in the infrared laser ray TL received through the optical receiver 410. Here, (x, y)=(dcosφ, dsinφ) where φ is the phase information. The position measuring unit 440 may estimate an incident angle ψ of the infrared laser from information about the condensing position that is received from the light direction detector 430, and a traveling direction θ= φ -ψ of the robot from the incident angle ψ.

An operation method whereby the beacon 300 transmits a infrared laser ray TL to the mobile robot 400, a distance is measured by the time difference between the transmission of the infrared laser ray TL and the receipt of the reflected infrared laser ray RL, and the position and the traveling direction θ of the mobile robot 400 are detected using the supplementary information contained in the transmitted infrared laser ray TL, according to an embodiment of the present general inventive concept, will be described.

First, in a case where the light generator 310 transmits the infrared laser ray TL n times during one revolution of the light generator 310 and the reflected light detector 320 by the rotation driver 330, an operation method according to an embodiment of the present general inventive concept will be described.

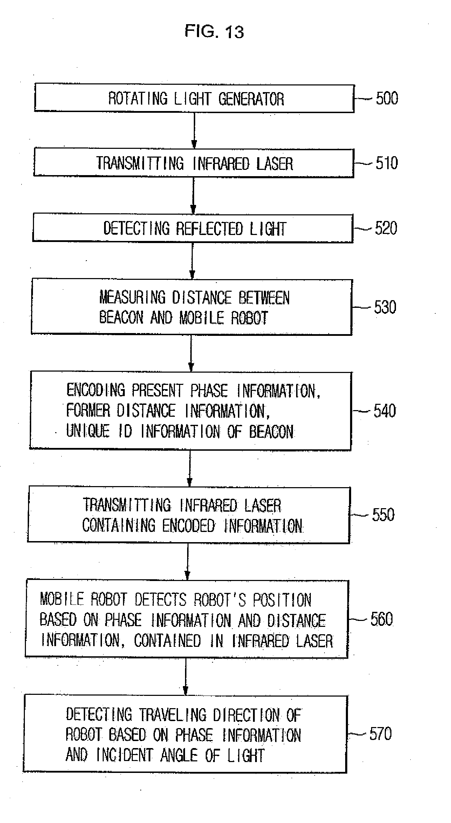

FIG. 13 is a flowchart illustrating a method of detecting a position and a traveling direction in a robot system according to an embodiment of the present general inventive concept. Referring to FIGS. 5 and 6, , in order to adjust the transmission direction of the infrared laser ray TL in response to the driving signal of the phase adjustor 340, the rotation driver 330 rotates the light generator 310 (500).

The light generator 310 transmits the infrared laser ray TL containing the information encoded by the encoder 350 (510).

The transmitted infrared laser ray TL is delivered to the mobile robot 400, is retroreflected by the optical reflectors 420 of the mobile robot 400 as the reflected laser ray RL, and then enters the transmission side, that is, the reflected light detector 320 of the beacon 300 (520).

The reflected light detector 320 detects the reflected infrared laser ray RL and delivers the reflected light detecting signal RLs to the distance measuring unit 325. The distance measuring unit 325 delivers the distance information, measured by the Time-of-Flight Measurement to measure a distance using the difference between the detecting time of the reflected light signal RLs and the transmission time of the transmitted light received from the light generator, to the encoder 350 (530).

The phase adjustor 340 delivers the phase information corresponding to the transmission direction of the infrared laser ray TL to be transmitted to the encoder 350. The encoder 350 encodes the phase information at the present (n time(s)), the distance information at the previous time (n-1 time(s)) that is received from the distance measuring unit 325, and the unique identity information ID of the beacon (540), and the light generator 310 puts the encoded supplementary information into a second infrared laser ray TL and transmits the same as the infrared laser ray TL to the mobile robot 550.

The optical receiver 410 receives the second transmitted infrared laser ray TL and delivers the same to the position measuring unit 440, and the light direction detector 430 delivers the information about the condensing position of the infrared laser ray TL to the position measuring unit 440. The position measuring unit 440 estimates the position of the mobile robot based on the phase information and the distance information that are contained in the second infrared laser laser ray TL (560), and estimates the traveling direction of the mobile robot 400 based on the phase information Φ and the incident angle ψ of the infrared laser (570). After that, the processes 500 to 570 are repeated to continue the operation of detecting the position and the traveling direction of the mobile robot 400.

According to the above embodiment of the present general inventive concept, the rotation driver may be constructed by integrally forming the light generator and the reflected light detector with the rotation shaft of the motor and the rotation shaft transmits the driving force of the motor, but the present general inventive concept is not limited thereto. Since the light generator and the reflected light detector may be integrally formed with the rotation shaft of the motor, a high power motor may be required for a smooth rotation, increasing the size of the motor required. Moreover, in a case of a predetermined directional rotation, since electric wires to connect the light generator to the reflected light detector may tangle, there may need to be some restriction of the rotation range. Similarly, althought the rotation driver may be reciprocally rotated within a restricted range, an acceleration and a reduction of the motor must be precisely controlled such that the rotation driver reciprocally rotates to change the transmission direction of the light beam.

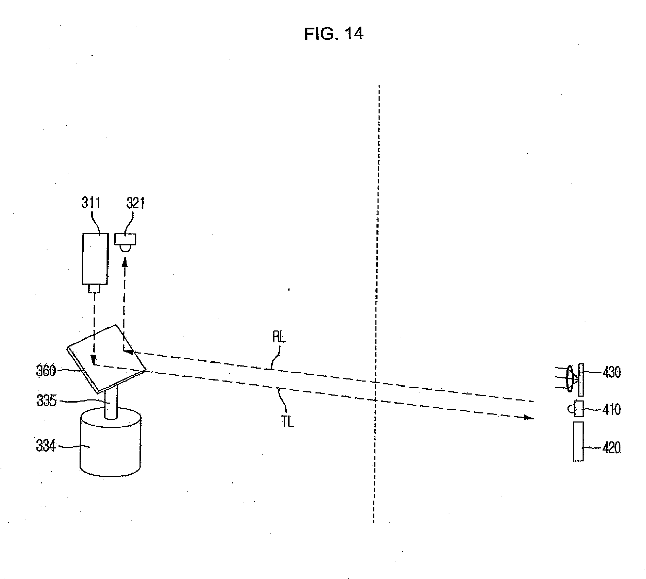

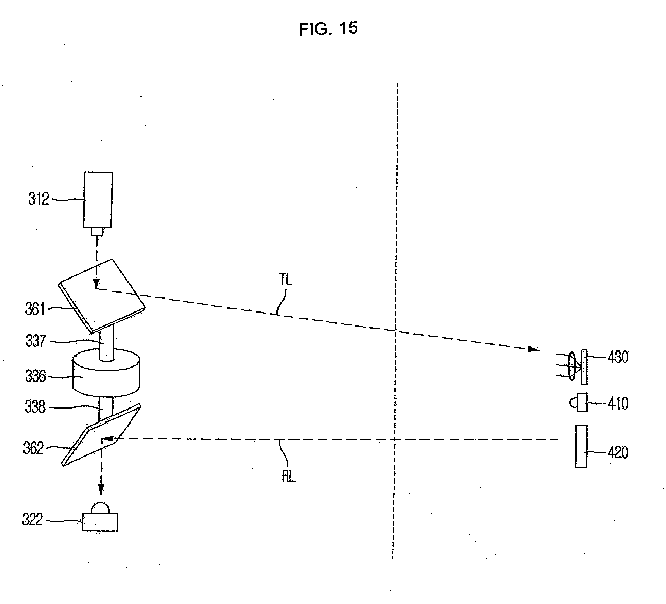

Taking into account the above considerations, the following embodiments according to the present general inventive concept and with reference to FIGS. 14 and 15 are presented below. Since the method of detecting the position and the traveling direction of the mobile robot using the transmitted light beam and the reflected light beam is identical, the detailed description thereof will be omitted.

First, where a wide width installation space is secured, a method of transmitting a light beam and detecting a reflected light beam using a single mirror may be employed as shown in FIG. 14.

Referring to FIGS. 5 and 14, the rotation driver 330 includes a rotation shaft 335 to connect a motor 334 to a single mirror 360. Above the single mirror 360, a light generator 311, to transmit an infrared laser ray TL with directionality, and a reflected light detector 321, to detect the reflected infrared laser ray RL retroreflected by an optical reflector 420 of the mobile robot 400, are disposed.

The single mirror 360 changes the traveling direction of the infrared laser ray TL transmitted at a predetermined incident angle toward the optical reflector 420 of the mobile robot, and changes the traveling direction of the reflected infrared laser ray RL retroreflected and returned by the mobile robot toward the reflected light detector 321.

As such, when using a single mirror 360, in order to make the traveling directions of the transmitted infrared laser ray TL and the retroreflected infrared laser ray RLparallel to each other, the light generator 311 and the reflected light detector 321 may be disposed parallel to a side of the single mirror.

If it is difficult to dispose the light generator and the reflected light detector parallel due to the restriction of installation circumstances, a method of transmitting a light beam and detecting the reflected light beam using two single mirrors, according to the present general inventive concept as illustrated in FIG. 15 may be employed.

Referring to FIGS. 5 and 15, the rotation driver 330 includes rotation shafts 337 and 338 to connect a motor 336 to two single mirrors 361 and 362 respectively disposed at an upper and a lower side of the motor 336. Above the upper single mirror 361, a light generator 312, to transmit an infrared laser ray TL having a directionality, is disposed, and below the lower single mirror 362, a reflected light detector 322, to detect the reflected infrared laser ray RL retroreflected by the optical reflector 420 of the mobile robot, is disposed. By doing so, the light generator 312, the upper single mirror 361, the reflected light detector 322, and the lower single mirror 362 are aligned with the rotation shafts 337 and 338 of the motor 336 at the sides of the motor 336, so that the rotation driver 330 can be applied to the installation circumstance to secure a vertically extended range.

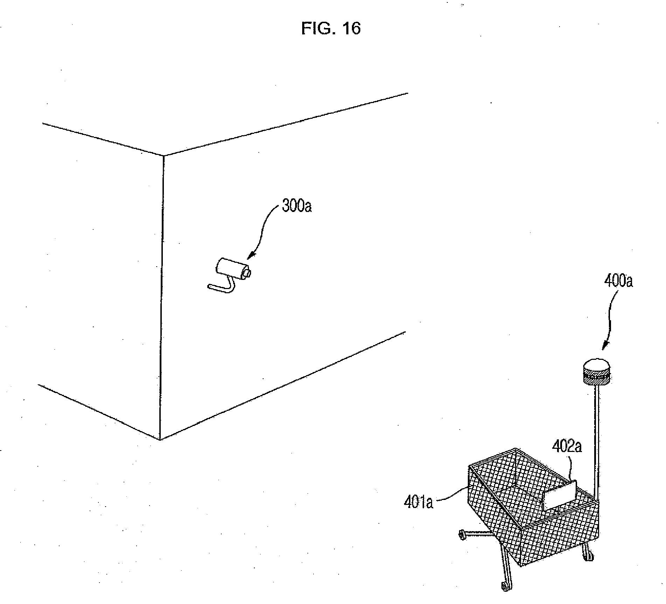

In the above embodiments, the present general inventive concept has been described inview of a mobile robot that receives the phase information φ and the distance information d contained in the infrared laser ray TL transmitted from the beacon to detect the position of the robot and to perform given jobs using the detected position. However, the positioning system according to the present general inventive concept is not limited to a freely moving mobile robot. For example, as illustrated in FIG. 16, a positioning unit 400a to determine a position, may be installed on a movable cart 401 a, such that the positioning unit 400a receives a light beam transmitted from a beacon 300a to detect the position of the cart by analyzing position information and distance information contained in the received light beam and to display the detected position information on an information display 402a. Here, the overall operation of the beacon 300a to encode the phase information and the distance information into the light beam and transmitting the light beam may be performed by employing the configurations of the previous embodiments of the present general inventive concept. By doing so, a user of the movable cart 401 a can easily check the position of the movable cart displayed on the information display 402a, and particularly, the transportation of objects performed in a large scale storehouse can be effectively performed.

The above-described method of the present general inventive concept may be embodied in a computer readable recording medium.

As described above, a position of a moving body such as a mobile robot, a movable cart, or the like can be precisely detected using the distance information measured by the difference between the transmission time of the transmitted light beam and the detecting time of the reflected light beam.

Since preferred embodiments of the present general inventive concept may use an infrared laser with a long range as a position determining light source to detect the position, the positioning system according to preferred embodiments of the present general inventive concept may be applied to a wide working area.

Since a single beacon is used to detect position, preferred embodiments of the present general inventive concept save costs to configure the system and is easily applied to a small sized robot.

Since preferred embodiments of the present general inventive concept may employ a method of rotating a single mirror, rotated by a motor, to transmit a light beam and to receive a reflected light beam, a low power motor can be used. Moreover, since the beacons may be easily installed by modifying the number of the single mirrors and the arrangement of the components, it is convenient to use.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A positioning system comprising:
a beacon (300); and
a moving body (400) to communicate with the beacon;
wherein the beacon measures a distance between the moving body and the beacon based on a time difference between a transmission time of a light transmitted by the beacon to detect a position of the moving body and a detecting time of a light reflected by the moving body to the beacon, and the moving body receives phase information and distance information of the transmitted light from the beacon to detect a relative position of the moving body with respect to the beacon.

2. The positioning system according to claim 1, wherein the beacon (300) comprises:
a light generator (310, 311, 312) to transmit the light having directionality;
a detector (320, 321, 322) to detect the reflected light; and
a distance measuring unit (325) to estimate the distance based on a difference between a time of a transmitted light signal of the transmitted light and a reflected light signal of the reflected light and a speed of light.

3. The positioning system according to claim 2, wherein the distance measuring unit (325) comprises an amplifier (326) to amplify the reflected light signal of the reflected light.

4. The positioning system according to claim 2 or claim 3, wherein the light generator (310, 311, 312) comprises an infrared laser diode to transmit an infrared laser ray as the transmitted light.

5. The positioning system according to any preceding claim, wherein the moving body comprises a mobile robot that travels freely with respect to the beacon (300).

6. The positioning system according to any one of claims 1-4, wherein the moving body (400) comprises a movable cart (401 a) to move with respect to the beacon.

7. The positioning system according to claim 6, wherein the moving body (400) further comprises a display (402a) to display the position of the movable cart.

8. The (420) positioning system according to any preceding claim, wherein the moving body (400) comprises an optical reflector installed on a surface of the moving body to reflect the light transmitted from the beacon (300) as the reflected light.

9. The positioning system according to claim 8, wherein the optical reflector (420) comprises a retroreflector to retroreflect an incident light to the beacon (300) as the reflected light.

10. The positioning system according to any preceding claim, wherein:
the beacon (300) further comprises an encoder (350) to encode the measured distance information and the phase information corresponding to the transmission direction of the light and to transmit the same to the moving body (400); and
the moving body further comprises a position measuring unit (440) to measure a relative position of the moving body based on the distance information and the phase information contained in the light.

11. The positioning system according to claim 10, wherein the encoder (350) encodes to contain the phase information corresponding to a present transmission direction of the light and the distance information measured by a previous transmitted reflected light.

12. The positioning system according to claim 11, wherein the encoder (350) produces a single packet encoded with the phase information, the distance information, and unique identityinformation of the beacon.

13. A beacon (300) having a light to detect a position of an object to be measured and to measure a distance to the object, the beacon comprising:
a light generator (310, 311, 312) to transmit a light having directionality to the object;
a reflected light detector (320, 321, 322) to detect a light that is transmitted from the light
generator and is reflected by the object; and
a distance measuring unit (325) to measure a distance between the beacon and the object based on a difference between a transmission time of the light and a detecting time of the reflected light.

14. The beacon (300) according to claim 13, further comprising:
a rotation driver (330) to synchronize and rotate the light generator (310, 311, 312) and the reflected light detector (320, 321, 322).

15. The beacon (300) according to claim 14, wherein the rotation driver (330) comprises a motor and a rotation shaft integrally connected to the light generator (310, 311, 312) and the reflected light detector (320, 321, 322) to generate a driving force to rotate the light generator and the reflected light detector.

16. The beacon (300) according to claim 14 or claim 15, further comprising:
a phase adjustor (340) to apply a driving signal to the rotation driver (330) to adjust the transmission direction of the light and to output phase information corresponding to the transmission direction of the light; and
an encoder (350) to encode phase information of the phase adjustor and distance information measured by the distance measuring unit (325) to put the encoded information into the light transmitted by the light generator (310, 311, 312).

17. The beacon (300) according to any one of claims 14-16, wherein the rotation driver (330) comprises:
at least one single mirror (360) to switch the traveling direction of the transmitted light from the light generator (310, 311, 312) and the traveling direction of a light retroreflected by the object; a motor (334) to rotate the single mirror; and
a rotation shaft (337, 338) to connect the single mirror to the motor.

18. The beacon (300) according to claim 17, wherein the light generator (310, 311, 312) and the reflected light detector (320, 321, 322) are disposed at a side of the single mirror (360).

19. The beacon according to claim 17 or claim 18, wherein when sides of the motor (334) are individually provided with the at least one single mirror (360), the light generator (310, 311, 312) transmits the light to one of the single mirrors on a first side thereof, the reflected light detector (320, 321, 322) receives the reflectedlight reflected by a single mirror on a second side thereof, and the light generator and the reflected light detector are disposed in the longitudinal direction.

20. A positioning method of a positioning system in which a moving body (400) moving in a working area distant from a beacon (300) at a fixed position detects its own position, comprising;
transmitting a light having directionality from the beacon;
measuring a distance between the beacon and the moving body by the beacon receiving the light reflected by the moving body;
encoding the measured distance information and a phase information corresponding to the transmission direction of the light into the light; and
detecting the position of the moving body based on the phase information and the distance information contained in the encoded light transmitted from the beacon by the moving body receiving the encoded light.

21. The positioning method according to claim 20, wherein the encoding of the information comprises encoding unique identity information of the beacon (300), and encoding the phase information, the distance information, and the unique identity information in a form of a single packet.

22. The positioning method according to claim 21, wherein the distance information comprises information measured by detecting a previous transmitted light, and the phase information comprises phase information of a light that is presently transmitted.

23. The positioning method according to any one of claims 20-22, wherein the moving body (400) comprises a mobile robot, and the mobile robot detects its own position and travels freely with respect to the beacon.

24. The positioning method according to any one of claims 20-22, wherein the moving body (400) comprises a movable cart (401 a) having a display (402a) to display the position of the movable cart.

25. A computer readable recording medium containing computer readable codes to perform a method of detecting a position of an object, the method comprising:
transmitting a light having directionality from a beacon;
measuring a distance between the beacon and the object by the beacon receiving the light reflected by the object;
encoding the measured distance information and a phase information corresponding to a transmission direction of the light into the light; and
detecting a position of the object based on the phase information and the distance information contained in the light transmitted from the beacon to object.

26. A beacon (300) to communicate with an object to determine a position of the object, the beacon comprising:
a light generator (310, 311, 312) to transmit a first light and a second light towards the object;
a reflected light detector (320, 321, 322) to detect a reflected light of the first light from the object;
a distance measuring unit (325) to measure a distance between the beacon and the object according to a time difference between a first time of the first light transmission and a second time of the detected reflected light; and
an encoder (350) to encode the information on the measured distance in a packet into the second light to be transmitted to the object.

27. A mobile robot (400) to communicate with a beacon (300), the mobile robot comprising:
an optical reflector (420) to reflect a first light of the beacon;
an optical receiver (410) to receive a second light of the beacon; and
a position measuring unit (440) to measure a position of the optical receiver according to information contained in the second light of the beacon.

28. A positioning system comprising:
a beacon (300) to communicate with a mobile robot (400) to determine a position of the mobile robot, the beacon comprising:
a light generator (310, 311, 312) to transmit a first light and a second light towards the mobile robot,
a reflected light detector (320, 321, 322) to detect a reflected light of the first light from the mobile robot,
a distance measuring unit (325) to measure a distance between the beacon and the mobile robot according to a time difference between a first time of the first light transmission and a second time of the detected reflected light, and
an encoder (350) to encode the information on the measured distance in a packet into the second light to be transmitted to the mobile robot; and
a mobile robot to communicate with the beacon, the mobile robot comprising:
an optical reflector (420) to reflect the first light of the beacon,
an optical receiver (410) to receive the second light of the beacon, and
a position measuring unit (440) to measure a position of the optical receiver according to the information contained in the second light of the beacon.
